# EUROPÄISCHE PATENTSCHRIFT

(11) **EP 1 300 309 B1**
(45) Veröffentlichungstag und Bekanntmachung des Hinweises auf die Patenterteilung: **01.12.2004**
(21) Anmeldenummer: 02018894.2
(22) Anmeldetag: 23.08.2002
(51) Int. Cl.: B60T 11/08, B60T 8/26, B60T 11/06

(54) **Kraftverteilungsvorrichtung**
Device for force distribution
Dispositif pour la répartition des forces

(30) Priorität: 06.09.2001 DE 10143693
(43) Veröffentlichungstag der Anmeldung: 09.04.2003
(73) Patentinhaber: GUSTAV MAGENWIRTH GmbH & Co., D-72574 Bad Urach (DE)
(72) Erfinder: Cherubin, Frank, 72574 Bad Urach (DE)
(74) Vertreter: Friese, Martin

(56) Entgegenhaltungen:
- DE-C- 3 928 874
- GB-A- 234 597
- GB-A- 540 557
- US-A- 2 155 042

## Beschreibung

Die Erfindung betrifft eine Kraftverteilungsvorrichtung gemäß dem Oberbegriff von Anspruch 1.

Derartige Kraftverteilungsvorrichtungen werden vorzugsweise bei Zweikreis-Bremsanlagen von Karts eingesetzt, um die Fußbremskraft, die über das Bremspedal eingeleitet wird, in zwei Komponenten aufzuteilen, die jeweils zur Betätigung der Bremse einen Hauptbremszylinder eines Bremskreises beaufschlagen. Üblicherweise werden derartige Kraftverteilungsvorrichtungen Waagebalkenverstellungen, mechanische Bremskraftverstellungen oder mechanische Bremskraftverteilungen genannt.

Durch die Verstellung des Kraftangriffspunktes an dem Hebelteil zwischen den beiden Kraftausgangspunkten werden die Hebelarme des Hebelteils verstellt. Entsprechend dem Hebelgesetz erfolgt eine Veränderung der Verteilung der eingehenden Kraft auf die beiden ausgehenden Kräfte, die von den beiden Kraftausgangspunkten zur Betätigung der Hauptbremszylinder der beiden Bremskreise weitergeleitet werden.

Bekannte Kraftverteilungsvorrichtungen sind beispielsweise so aufgebaut, daß das Hebelteil als Gewindestange ausgebildet ist, an deren Enden Kraftausgangspunkte angelenkt sind. Die Gewindestange ist um ihre Achse drehbar angeordnet. Als Kraftangriffspunkt ist auf der Gewindestange ein als Gewindebuchse ausgebildetes Kraftaufnahmeteil montiert, das mit dem krafteinleitenden Bremspedal verbunden ist und gegen Drehen gesichert ist. Bei einer Drehung der Gewindestange bewegt sich die Gewindebuchse entlang der Gewindestange zwischen den beiden Kraftausgangspunkten je nach Drehrichtung hin oder her.

Bei alternativen bekannten Ausführungen ist das Hebelteil als flaches geschlitztes Teil ausgebildet, auf dem sich das Kraftaufnahmeteil hin und her bewegen kann. Die Hin- und Herbewegung wird durch eine parallel zum Hebelteil angeordnete Gewindestangenkonstruktion mit einem entsprechenden Aufbau kontrolliert.

Desweiteren ist eine Ausführung bekannt, bei der das Kraftaufnahmeteil als Rohrabschnitt ausgebildet ist, in dessen Innenmantel eine Verdickung einer das Hebelteil darstellenden Gewindestange geführt wird. Durch die axiale Verschiebung der Gewindestange kann die Verdickung außermittig werden, wodurch eine Änderung der Kraftverteilung möglich ist.

Die bekannten Ausführungen haben den Nachteil, daß die Verstellung relativ umständlich und eine Drehung der Gewindestange um viele Umdrehungen erforderlich ist. Außerdem ist allen bekannten Ausführungen gemein, daß sie eine Verstellung nur in einem bestimmten Umfang zulassen. Weiterhin erreicht keine der bekannten Ausführungen aus konstruktiven Gründen, daß die eingehende Kraft zu 100% auf einen Bremskreis wirkt, während der andere Bremskreis keine Krafteinleitung erfährt.

Die US 234,597 offenbart eine Kraftverteilungseinrichtung gemäß dem Oberbegriff von Anspruch 1.

Der Erfindung liegt daher die Aufgabe zugrunde, eine Kraftverteilungsvorrichtung für eine Zweikreis-Bremsanlage anzugeben, bei der die Kraftverteilung besonders einfach und schnell in einem großen Bereich einstellbar ist.

Die Erfindung wird mit einer Kraftverteilungsvorrichtung gemäß den Merkmalen von Anspruch 1 gelöst. Vorteilhafte Ausgestaltungen der Erfindung sind in den abhängigen Ansprüchen angegeben.

Erfindungsgemäß umfaßt die Kraftverteilungsvorrichtung für eine Zweikreis-Bremsanlage ein Kraftaufnahmeteil zur Aufnahme einer bei Betätigung eines Bremspedals eingehenden Kraft, ein Hebelteil zur Verteilung der eingehenden Kraft auf zwei Kraftausgangspunkte, wobei das Hebelteil einen Kraftangriffspunkt zur Aufnahme der von dem Kraftaufnahmeteil auf das Hebelteil übertragenen Kraft und zwei Hebelarme aufweist, die von dem Kraftangriffspunkt jeweils zu einem der beiden Kraftausgangspunkte verlaufen, und eine Verstellvorrichtung zur Verstellung des Kraftangriffspunkts, um das Verhältnis der beiden Hebelarme zu verändern, wobei die Verstellvorrichtung ein Einrastteil und das Hebelteil in einem Mittelbereich eine mehrere Einraststellungen für das Einrastteil bestimmende Rasteroberfläche aufweist.

Durch diese Konstruktion läßt sich die Kraftverteilungsvorrichtung schnell und einfach zwischen den möglichen Endstellungen verstellen, weil für eine bestimmte gewünschte Verstellung das Einrastteil nur auf der Rasteroberfläche in der gewünschten Einraststellung angeordnet werden muß.

Gemäß einer bevorzugten Ausführung der Erfindung ist das Einrastteil zur Verstellung von einer Einraststellung in eine benachbarte Einraststellung um eine Drehachse drehbar angeordnet. Zur Verstellung muß das Einrastteil nur auf der Rasteroberfläche von einer Einraststellung in eine gewünschte andere Einraststellung abgerollt werden.

Gemäß einer Ausführung der Erfindung liegt dabei die Drehachse des Einrastteils senkrecht zu der eingehenden Kraft und die eingehende Kraft drückt das Einrastteil gegen die Rasterfläche. Diese Ausführung hat den Vorteil, daß die eingehende Kraft gewährleistet, daß das Einrastteil die eingestellte Einraststellung nicht ungewollt verläßt. Zur Verstellung muß das Einrastteil entgegen der eingehenden Kraft aus der Einraststellung herausgedreht und in die gewünschte Einraststellung gedreht werden.

Gemäß einer weiteren Ausführung der Erfindung liegt die Drehachse parallel zu der eingehenden Kraft. Diese Ausführung hat den Vorteil, daß die Kraftverteilungsvorrichtung mit derselben Konstruktion sowohl für Zugkraftzylinder als auch für Druckkraftzylinder einsetzbar ist. Eine zusätzliche Sicherungseinrichtung kann zur Sicherung des Einrastteils in der Einraststellung vorgesehen werden. Beispielsweise kann das Einrastteil mit einer Federeinrichtung in die Einraststellung gedrückt werden.

Die eingehende Kraft kann eine Zugkraft oder eine Schubkraft sein. Soll die Drehachse des Einrastteils parallel zu der eingehenden Kraft liegen, kann die Kraftverteilungsanordnung unabhängig davon konstruiert werden, ob die eingehende Kraft eine Zugkraft oder eine Schubkraft ist. Soll die Drehachse des Einrastteils hingegen senkrecht zu der eingehenden Kraft liegen, muß die Kraftverteilungsanordnung derart konstruiert werden, daß die eingehende Kraft das Einrastteil in die Einraststellungen drückt.

Gemäß einer Ausführung der Erfindung fluchtet in einer Einraststellung (Extremstellung) des Einrastteils eine Ausgangskraft mit der eingehenden Kraft, und in einer anderen Einraststellung (gegenüberliegende Extremstellung) des Einrastteils fluchtet die andere Ausgangskraft mit der eingehenden Kraft. Das hat den Vorteil, daß in den beiden extremen Einraststellungen die eingehende Kraft nur auf eine der beiden Ausgangskräfte weitergeleitet wird, während die andere Ausgangskraft Null ist. Dadurch kann das Fahrwerk für die beiden Bremskreise getrennt abgestimmt werden. Gemäß einer Weiterbildung hat diese Kraftverteilungsvorrichtung Begrenzungsvorrichtungen, die die maximal einstellbaren Einraststellungen für das Einrastteil begrenzen, wobei die Begrenzungsvorrichtungen vorzugsweise Stifte und/oder Kappen aufweisen, die an den beiden Seiten der Rasteroberfläche anordbar sind. Durch die Begrenzungsvorrichtungen ist gewährleistet, daß immer beide Bremskreise beim Bremsen ansprechen, was eventuell beim Rennbetrieb notwendig ist. Außerdem ist beim Ausfall eines Bremskreises und/oder der Kraftverteilungsvorrichtung eine Bremswirkung gewährleistet.

Gemäß einer Ausführung der Erfindung weist die Rasteroberfläche eine zahnstangenartige Oberflächenstruktur auf, und das Einrastteil weist eine entsprechende zahnradartige Oberflächenstruktur auf. Dadurch ergibt sich ein besonders einfacher und kostengünstiger Aufbau.

Gemäß einer Ausführung der Erfindung weist das Einrastteil Vorsprünge mit einer runden, vorzugsweise kreissegmentförmigen Oberflächenstruktur auf, und die Rasteroberfläche weist eine entsprechende Struktur zur Aufnahme der Vorsprünge des Einrastteils auf. Diese Ausführung bietet einen besonders guten Formschluß des Einrastteils in den Einraststellungen. Dabei kann das Einrastteil sechs bis drei, vorzugsweise fünf bis vier und insbesondere vorzugsweise vier Vorsprünge aufweisen.

Bei der Wahl der Anzahl der Vorsprünge spielen folgende Erwägungen eine Rolle. Je kleiner die Anzahl der Vorsprünge ist, desto größer ist der mögliche Winkel, um den sich das Hebelteil gegenüber der eingehenden Kraft schiefstellen kann, ohne daß das Einrastteil in eine benachbarte Einraststellung durch das von der eingehenden Kraft ausgeübte Drehmoment verstellt wird. Je größer die Anzahl der Vorsprünge ist, desto feiner kann die Kraftverteilungsvorrichtung eingestellt werden.

Bei einer Ausführung mit einer senkrecht zur eingehenden Kraft angeordneten Drehachse des Einrastteils hat sich herausgestellt, daß vier Vorsprünge eine zufriedenstellende Lösung bieten.

Gemäß einer Ausführung der Erfindung stellt die Rasteroberfläche fünf bis einundzwanzig, vorzugsweise neun bis dreizehn und insbesondere vorzugsweise elf Einraststellungen bereit. Bei vier Vorsprüngen kann somit das Einrastteil mit einer bis vier, vorzugsweise mit zwei bis drei und insbesondere vorzugsweise mit zweieinhalb Umdrehungen von einer Extremstellung in die andere Extremstellung gebracht werden. Eine ungerade Zahl von Einraststellungen hat bei einem symmetrischen Aufbau desweiteren den Vorteil, daß eine Mittelstellung einstellbar ist, bei der gleich große Ausgangskräfte für die beiden Bremskreise erreichbar sind.

Gemäß einer Ausführung der Erfindung weist das Hebelteil zwischen dem Mittelbereich und dem einen Kraftausgangspunkt einen Bogenbereich auf. Weiterhin kann das Hebelteil zwischen dem Mittelbereich und dem anderen Kraftausgangspunkt einen weiteren Bogenbereich aufweisen. Dabei können sich der oder die Bogenbereiche jeweils um mehr als 90 Grad, vorzugsweise um mehr als 135 Grad und insbesondere vorzugsweise über 180 Grad erstrecken. Dadurch wird es möglich, die Kraftausgangspunkte an dem Hebelteil in der Verlängerung der Rasteroberfläche auszubilden, so daß die eingehende Kraft mit einer der Ausgangskräfte fluchtend eingestellt werden kann, um die eingehende Kraft ausschließlich auf diese Ausgangskraft weiterzuleiten.

Vorteilhafterweise weist bei einer Ausführung der Erfindung die Verstellvorrichtung ein Bedienelement auf, das drehfest mit dem Einrastteil verbunden ist. Das Bedienelement kann mit dem Einrastteil unmittelbar verbunden, über eine starre Welle verbunden und/oder über ein Fernbedienungssystem, insbesondere eine biegsame Welle, verbunden sein. Bei letzterer Ausführung kann das Bedienelement vorteilhafter in die Reichweite des Fahrers angeordnet werden, damit die Verstellung der Kraftverteilungsvorrichtung auch während der Fahrt erfolgen kann. Das Bedienelement kann einen Handgriff oder ein Stellglied einer Fernsteueranlage aufweisen.

Gemäß einer Ausführung der Erfindung weist die Kraftverteilungsvorrichtung eine Federeinrichtung auf, die die Rasteroberfläche gegen das Einrastteil spannt. Dadurch wird das Einrastteil gegebenenfalls zusätzlich in den Einraststellungen gesichert. Vorteilhafterweise umfaßt die Federeinrichtung eine Schraubenfeder. Dabei spannt die Schraubenfeder das Kraftaufnahmeteil von dem Hebelteil vorteilhafterweise derart weg, daß das Hebelteil mit der Rasteroberfläche gegen das Einrastteil gedrückt wird. Als Verschleißschutz kann zwischen der Schraubenfeder und dem Hebelteil eine Kugel vorgesehen werden.

Die Erfindung umfaßt auch eine Zweikreis-Bremsanlage mit einer erfindungsgemäßen Kraftverteilungsvorrichtung, wobei die bei Betätigung des Bremspedals eingehende Kraft von dem Kraftaufnahmeteil der Kraftverteilungsvorrichtung aufgenommen und von dem Hebelteil auf zwei ausgehende Kräfte verteilt wird, die von den beiden Kraftausgangspunkten zur Betätigung der Hauptbremszylinder der beiden Bremskreise weitergeleitet werden.

Die Erfindung wird anhand des in den Figuren gezeigten Ausführungsbeispiels im folgenden beschrieben.
- Fig. 1: zeigt eine Ansicht einer Kraftverteilungsvorrichtung gemäß der Erfindung von oben.
- Fig. 2: zeigt einen Schnitt der Kraftverteilungsvorrichtung von Fig. 1 entlang der Linie II-II von Fig. 1.
- Fig. 3: zeigt eine Seitenansicht der Kraftverteilungsvorrichtung von Fig. 1
- Fig. 4: zeigt eine Ansicht der Kraftverteilungsvorrichtung von Fig. 1 von oben in einer Stellung, bei der unterschiedliche Bremskräfte auf die beiden Kreise ausgeübt werden.
- Fig. 5: zeigt eine perspektivische Ansicht der Kraftverteilungsvorrichtung von Fig. 1.

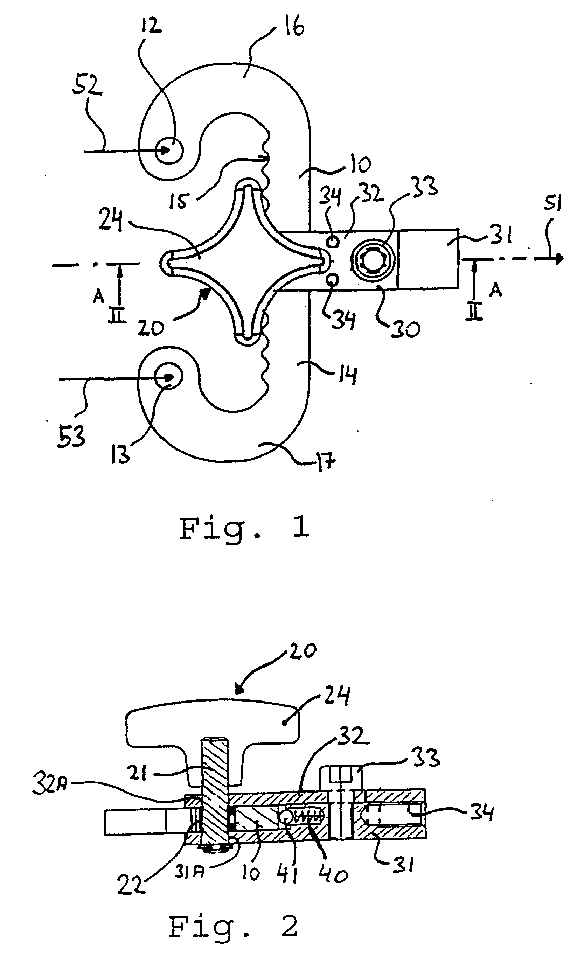

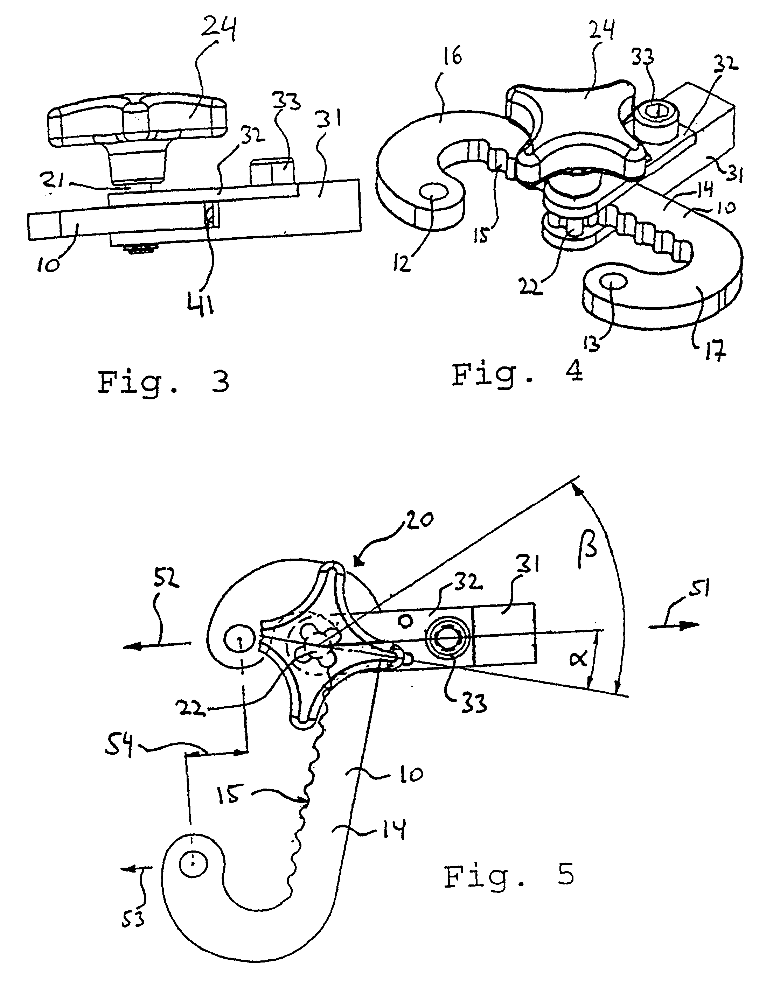

Fig. 1 zeigt eine Ansicht der erfindungsgemäßen Kraftverteilungsvorrichtung von oben. Die Kraftverteilungsvorrichtung weist ein Hebelteil 10, eine Verstellvorrichtung 20 und ein Kraftaufnahmeteil 30 auf. Das Hebelteil 10 ist bei dem gezeigten Ausführungsbeispiel bügelartig ausgebildet. Es weist einen Mittelbereich 14 auf, an dessen der Verstellvorrichtung 20 zugewandten Seite eine Rasteroberfläche 15 mit einer zahnstangenartigen Struktur ausgebildet ist. Die Rasteroberfläche 15 bestimmt Einraststellungen, in denen die Verstellvorrichtung 20 einrasten kann. Die Verstellvorrichtung 20 weist ein Einrastteil 22 auf, das mit der in Fig. 2 gezeigten starren Welle 21 mit einem Bedienelement 24 drehfest verbunden ist. Bei derdargestellten Ausführung ist das Bedienelement 24 ein Handgriff. Das Einrastteil 22 weist einen zahnradähnlichen Aufbau auf. Mit anderen Worten weist das Einrastteil 22 vier Vorsprünge mit einem halbkreisförmigen Querschnitt auf. Die Rasteroberfläche 15 des Hebelteils 10 weist entsprechende Vertiefungen zur Aufnahme der Vorsprünge des Einrastteils 22 auf. Bei der dargestellten Ausführung weist die Rasteroberfläche 15 zwölf Vertiefungen auf, so daß sich elf bestimmte Einraststellungen für das Einrastteil 22 ergeben. Um von einer Einraststellung in eine benachbarte Einraststellung zu gelangen, bewegt sich das Einrastteil 22 beim Abrollen auf der Rasteroberfläche 15 etwas von der Rasteroberfläche 15 weg und nähert sich in der neu eingenommenen Einraststellung wieder an die Rasteroberfläche 15 an.

An den Mittelbereich 14 schließen sich an beiden Seiten des Hebelteils 10 Bogenbereiche 16, 17 an, die über ungefähr 180° verlaufen. An dem Ende der Bogenbereiche 16, 17 sind Kraftangriffspunkte 12, 13 ausgebildet. Die Kraftangriffspunkte 12, 13 sind als Bohrungen ausgebildet, in die auf bekannte Weise jeweils ein nicht dargestellter Bolzen eingreifen kann, um die jeweils ausgehende Kraft 52, 53 an den entsprechenden Hauptbremszylinder des Bremskreises weiterzuleiten.

Die Feststellvorrichtung 20 ist drehbar in dem Kraftaufnahmeteil 30 auf der der eingehenden Kraft 51 entgegengesetzten Seite aufgenommen. Das Kraftaufnahmeteil 30 weist ein Unterteil 31 und ein Oberteil 32 auf. Das Unterteil 31 weist an seiner der eingehenden Kraft 51 zugewandten Seite eine Bohrung mit einem Innengewinde 34 auf, in die auf bekannte Weise ein Anschlußteil zur Einleitung der eingehenden Kraft eingeschraubt werden kann. Das Oberteil 32 ist mit einer Schraube 33 an dem Unterteil 31 befestigt. Desweiteren sind Stifte 34 für die Kraftübertragung von dem Unterteil 31 auf das Oberteil 32 vorgesehen. Die Stifte 34 dienen außerdem zur genauen Positionierung des Oberteils 32 auf dem Unterteil 31. Zwischen dem Oberteil 32 und dem Unterteil 31 ist das Hebelteil 10 verstellbar angeordnet. Die Verstellvorrichtung 20 ist in den dem Oberteil 32 und dem Unterteil 31 ausgebildeten Öffnungen 32A, 31A drehbar aufgenommen.

Zwischen der Schraube 33 und dem Hebelteil 10 sowie zwischen dem Oberteil 32 und dem Unterteil 31 ist eine Schraubenfeder 40 angeordnet, die das Hebelteil 10 gegen die Verstellvorrichtung 20 drückt. Die Federkraft ist so groß gewählt, daß trotz der beim Fahren eventuell auftretenden Stöße oder Schläge die Verstellvorrichtung 20 mit dem Einrastteil 22 immer an der Rasteroberfläche 15 des Hebelteils 10 anliegt. Außerdem wird das Einrastteil 22 durch die Federkraft der Feder 40 in die von der Rasteroberfläche 15 definierten Einraststellungen gedrückt. Als Verschleißschutz ist an den dem Hebelteil zugewandten Ende der Feder 40 eine Kugel 41 vorgesehen, die bei Verstellung der Kraftverteilungsvorrichtung entlang des Hebelteils 10 entlanggleitet bzw. abrollt.

Durch die Bogenbereiche 16, 17 ist es möglich, den Kraftausgangspunkt 13 in Verlängerung der Richtung der eingehenden Kraft 51 auszurichten. Dadurch ist es möglich, 100% der eingehenden Kraft auf einen Hauptbremszylinder eines Bremskreises weiterzuleiten, während der andere Bremskreis betätigt wird. Diese Stellung ist beispielsweise sinnvoll, wenn die Fahrwerksabstimmung mit nur einem Bremskreis erfolgen soll. Außerdem kann bei Ausfall eines Bremskreises die gesamte Bremskraft auf den intakten Bremskreis geleitet werden.

Fig. 2 zeigt einen Schnitt durch die Kraftverteilungsvorrichtung von Fig. 1 entlang den Linie II-II, Fig. 3 zeigt eine Seitenansicht der Kraftverteilungsvorrichtung von Fig. 1 von der Seite und Fig. 4 zeigt eine perspektivische Ansicht der erfindungsgemäßen Kraftverteilungsvorrichtung von Fig. 1. Bezüglich der Beschreibung der Teile wird auf die Beschreibung von Fig. 1 verwiesen.

Fig. 5 zeigt eine Ansicht der erfindungsgemäßen Kraftverteilungsvorrichtung von Fig. 1 von oben. Die Kraftverteilungsvorrichtung befindet sich in einer Stellung, in der die Verstellvorrichtung 20 mit dem Einrastteil 22 in der einen extremen Einraststellung eingerastet ist. Der Winkel α bezeichnet den Winkel zwischen der eingehenden Kraft 51 und der Normalen der Rasteroberfläche 15. Der Winkel β bezeichnet den Maximalwinkel, den die eingehende Kraft 51 gegenüber der Normalen der Rasteroberfläche 15 haben kann, ohne daß das Einrastteil 22 durch die eingehende Kraft aus einer Einraststellung in die benachbarte Einraststellung gezwungen werden würde. Wäre der Winkel α größer als der Winkel β, würde die Verstellvorrichtung automatisch in ihre Endstellung verstellt werden. Die Geometrie der Kraftverteilungsanordnung ist derart gewählt, daß der Winkel α immer kleiner als der Winkel β ist.

Bei der gezeigten Ausführung fluchtet die ausgehende Kraft 52 nahezu mit der eingehenden Kraft 51. Daher wird nahezu 100% der eingehenden Kraft auf den Bremszylinder des Bremskreises übertragen, auf den die ausgehende Kraft 52 wirkt.

Der bei beispielsweise in Fig. 5 gezeigten außermittigen Einraststellung entstehende Hubunterschied 54 bewirkt eine Schiefstellung des Hebelteils 10. Die Kraftaufnahmevorrichtung verbleibt infolge der eingehenden Kraft entlang dieser Kraft ausgerichtet. Die Vorsprünge des Einrasteils 22 greifen derart in die Rasteroberfläche 15 ein, daß sich das Einrastteil 22 nicht selbsttätig aus der Einraststellung herausbewegen kann. Die Kräfte wirken auf das Einrastteil stets so, daß auf die Drehachse des Einrastteils 22 kein Drehmoment wirkt, die das Einrastteil 22 in eine benachbarte Einraststellung verstellen würde. Im Gegenteil wirken die Kräfte so, daß das Einrastteil 22 stets in die die eingenommene Einraststellung bestimmenden Vertiefungen der Rasteroberfläche gedrückt werden. Dies gilt solange der Winkel α kleiner als der Winkel β ist. Wie oben ausgeführt ist die Konstruktion derart ausgebildet, daß das immer gewährleistet ist.

Das in den Figuren 1 bis 5 gezeigte Ausführungsbeispiel ist besonders gut für Hauptbremszylinder verwendbar, deren Maximalhub kleiner oder gleich dem Hubunterschied 54 ist. Fig. 5 zeigt die Kraftverteilungsvorrichtung mit einem maximalen Hubunterschied 54. In Fig. 1 ist die Verstellvorrichtung 20 in der Mittelstellung gezeigt, bei der gleichgroße Ausgangskräfte 52 und 53 auf die jeweilige Hauptbremszylinder ausgeübt werden. Der Hubunterschied in der Stellung von Fig. 1 ist Null.

Die in den Figuren 1 bis 5 dargestellte erfindungsgemäße Kraftverteilungsvorrichtung eignet sich besonders gut für Zugzylinderanordnungen. Zugzylinderanordnungen zur Betätigung der Bremskreise sind besonders vorteilhaft, weil sich durch die ausgeübte Zugkraft zur Betätigung der Bremse der Bremszylinder automatisch mit dem Betätigungselement ausrichtet.

Eine erfindungsgemäße alternative nicht dargestellte Kraftverteilungsvorrichtung kann mit Hauptbremszylindern verwendet werden, die als Druckzylinder ausgebildet sind. Diese in den Zeichnungen nicht dargestellte Ausführungsform unterscheidet sich von der dargestellten Ausführungsform im wesentlichen dadurch, daß die Rasteroberfläche des Hebelteils auf der der eingehenden Kraft zugewandten Seite des Hebelteils ausgebildet ist und die Verstellvorrichtung mit dem Einrastteil auf der anderen Seite des Hebelteils, d.h. auf der Seite der Rasteroberfläche, angeordnet ist. Entsprechend kann die optionale Federeinrichtung mit der Feder und Kugel auf der der Rasteroberfläche gegenüberliegenden Seite des Hebelteils angeordnet sein, um das Hebelteil gegen die Verstellvorrichtung zu spannen. Entsprechend dem dargestellten Ausführungsbeispiel können Bogenbereiche vorgesehen sein, um jeweils einen der Kraftausgangspunkte bei einer extremen Einraststellung in Flucht mit der eingehenden Kraft zu bringen.

Gemäß einer weiteren nicht dargestellten Ausführung einer erfindungsgemäßen Kraftverteilungsvorrichtung hat das Hebelteil seine Rasteroberfläche auf seiner Oberseite. Das Einrastteil der Verstellvorrichtung rollt entsprechend dem gezeigten Ausführungsbeispiel auf der Rasteroberfläche ab, um von einer Einraststellung in eine benachbarte Einraststellung verstellt zu werden. Die Drehachse des Einrastteils der Verstellvorrichtung liegt bei dieser Ausführung parallel zu der eingehenden und den ausgehenden Kräften. Daher wirkt bei dieser Ausführung die eingehende Kraft einer Verstellung der Kraftverteilungsvorrichtung nicht entgegen. Um das Einrastteil in der Einraststellung zu sichern kann beispielsweise eine Federeinrichtung vorgesehen sein, die das Einrastteil gegen die Rasteroberfläche vorspannt. Die Vorspannkraft der Federeinrichtung sollte hinreichend sein, um ein ungewolltes Verstellen auszuschließen.

## Patentansprüche

1. Kraftverteilungsvorrichtung für eine Zweikreis-Bremsanlage mit
einem Kraftaufnahmeteil (30) zur Aufnahme einer bei Betätigung eines Bremspedals eingehenden Kraft (51),
einem Hebelteil (10) zur Verteilung der eingehenden Kraft (51) auf zwei Kraftausgangspunkte (12, 13), wobei das Hebelteil einen Kraftangriffspunkt zur Aufnahme der von dem Kraftaufnahmeteil auf das Hebelteil übertragenen Kraft und zwei Hebelarme aufweist, die von dem Kraftangriffspunkt jeweils zu einem der beiden Kraftausgangspunkte (12, 13) verlaufen, und
einer Verstellvorrichtung (20) zur Verstellung des Kraftangriffspunkts, um das Verhältnis der beiden Hebelarme zu verändern,
**dadurch gekennzeichnet, daß** die Verstellvorrichtung (20) ein Einrastteil (22) und das Hebelteil (10) in einem Mittelbereich (14) eine mehrere Einraststellungen für das Einrastteil (22) bestimmende Rasteroberfläche (15) aufweist.

2. Kraftverteilungsvorrichtung nach Anspruch 1, **dadurch gekennzeichnet, daß** das Einrastteil (22) zur Verstellung von einer Einraststellung in eine benachbarte Einraststellung um eine Drehachse drehbar angeordnet ist.

3. Kraftverteilungsvorrichtung nach Anspruch 2, **dadurch gekennzeichnet, daß** die Drehachse senkrecht zu der eingehenden Kraft (51) liegt und die eingehende Kraft (51) das Einrastteil (22) gegen die Rasteroberfläche (15) drückt.

4. Kraftverteilungsvorrichtung nach Anspruch 2, **dadurch gekennzeichnet, daß** die Drehachse parallel zu der eingehenden Kraft liegt.

5. Kraftverteilungsvorrichtung nach einem der vorhergehenden Ansprüche, **dadurch gekennzeichnet, daß** die eingehende Kraft (51) eine Zugkraft ist.

6. Kraftverteilungsvorrichtung nach einem der Ansprüche 1 bis 4, **dadurch gekennzeichnet, daß** die eingehende Kraft eine Schubkraft ist.

7. Kraftverteilungsvorrichtung nach einem der vorhergehenden Ansprüche, **dadurch gekennzeichnet, daß** in einer Einraststellung (Extremstellung) des Einrastteils eine Ausgangskraft mit der eingehenden Kraft fluchtet, und daß in einer anderen Einraststellung (gegenüberliegende Extremstellung) des Einrastteils die andere Ausgangskraft mit der eingehenden Kraft fluchtet.

8. Kraftverteilungsvorrichtung nach Anspruch 8, **gekennzeichnet durch** Begrenzungsvorrichtungen, die die maximal einstellbaren Einraststellungen für das Einrastteil (22) begrenzen, wobei die Begrenzungsvorrichtungen vorzugsweise Stifte und/oder Kappen aufweisen, die an den beiden Seiten der Rasteroberfläche (15) anordbar sind.

9. Kraftverteilungsvorrichtung nach einem der vorhergehenden Ansprüche, **dadurch gekennzeichnet, daß** die Rasteroberfläche (15) eine zahnstangenartige Oberflächenstruktur aufweist, und daß das Einrastteil (22) eine entsprechende zahnradartige Oberflächenstruktur aufweist.

10. Kraftverteilungsvorrichtung nach einem der vorhergehenden Ansprüche, **dadurch gekennzeichnet, daß** das Einrastteil (22) Vorsprünge mit einer runden, vorzugsweise kreissegmentförmigen Oberflächenstruktur aufweist, und daß die Rasteroberfläche (15) eine entsprechende Struktur zur Aufnahme der Vorsprünge des Einrastteils (22) aufweist.

11. Kraftverteilungsvorrichtung nach Anspruch 10, **dadurch gekennzeichnet, daß** das Einrastteil (22) sechs bis drei, vorzugsweise fünf bis vier und insbesondere vorzugsweise vier Vorsprünge aufweist.

12. Kraftverteilungsvorrichtung nach einem der vorhergehenden Ansprüche, **dadurch gekennzeichnet, daß** die Rasteroberfläche (15) fünf bis einundzwanzig, vorzugsweise neun bis dreizehn und insbesondere vorzugsweise elf Einraststellungen bereitstellt.

13. Kraftverteilungsvorrichtung nach einem der vorhergehenden Ansprüche, **dadurch gekennzeichnet, daß** das Hebelteil (10) zwischen dem Mittelbereich (14) und dem einen Kraftausgangspunkt (12) einen Bogenbereich (16) aufweist.

14. Kraftverteilungsvorrichtung nach Anspruch 13, **dadurch gekennzeichnet, daß** das Hebelteil (10) zwischen dem Mittelbereich (14) und dem anderen Kraftausgangspunkt (13) einen weiteren Bogenbereich (17) aufweist.

15. Kraftverteilungsvorrichtung nach einem der vorhergehenden Ansprüche, **dadurch gekennzeichnet, daß** sich der oder die Bogenbereiche (16, 17) jeweils um mehr als 90 Grad, vorzugsweise um mehr als 135 Grad und insbesondere vorzugsweise über 180 Grad erstrecken.

16. Kraftverteilungsvorrichtung nach einem der vorhergehenden Ansprüche, **dadurch gekennzeichnet, daß** die Verstellvorrichtung (20) ein Bedienelement (24) aufweist, das drehfest mit dem Einrastteil (22) verbunden ist.

17. Kraftverteilungsvorrichtung nach Anspruch 16, **dadurch gekennzeichnet, daß** das Bedienelement (24) mit dem Einrastteil (22) unmittelbar verbunden, über eine starre Welle (21) verbunden und/oder über ein Fernbedienungssystem, insbesondere eine biegsame Welle, verbunden ist.

18. Kraftverteilungsvorrichtung nach einem der vorhergehenden Ansprüche, **dadurch gekennzeichnet, daß** das Bedienelement (24) einen Handgriff oder ein Stellglied einer Fernsteueranlage aufweist.

19. Kraftverteilungsvorrichtung nach einem der vorhergehenden Ansprüche, **gekennzeichnet durch** eine Federeinrichtung (41), die die Rasteroberfläche (15) gegen das Einrastteil (22) spannt.

20. Kraftverteilungsvorrichtung nach einem der vorhergehenden Ansprüche, **dadurch gekennzeichnet, daß** die Federeinrichtung (41) eine Schraubenfeder aufweist.

21. Kraftverteilungsvorrichtung nach Anspruch 20, **dadurch gekennzeichnet, daß** die Schraubenfeder (41) das Kraftaufnahmeteil (30) von dem Hebelteil (10) derart wegspannt, daß das Hebelteil (10) mit der Rasteroberfläche (15) gegen das Einrastteil (22) gedrückt wird.

22. Kraftverteilungsvorrichtung nach Anspruch 20 oder 21, **dadurch gekennzeichnet, daß** zwischen der Schraubenfeder (41) und dem Hebelteil (10) ein Verschleißschutz vorzugsweise in Form einer Kugel (42) vorgesehen ist.

23. Zweikreis-Bremsanlage mit einer Kraftverteilungsvorrichtung nach einem der vorhergehenden Ansprüche, **dadurch gekennzeichnet, daß** die bei Betätigung des Bremspedals eingehende Kraft von dem Kraftaufnahmeteil (30) der Kraftverteilungsvorrichtung aufgenommen und von dem Hebelteil (10) auf zwei ausgehende Kräfte verteilt wird, die von den beiden Kraftausgangspunkten (12, 13) zur Betätigung der Hauptbremszylinder der beiden Bremskreise weitergeleitet werden.

## Claims

1. Device for force distribution for a two-circuit brake unit comprising
a force-transducing part (30) for receiving a force (51) arriving when a brake pedal is pressed,
a lever part (10) for distributing the incoming force (51) over two force starting points (12, 13), the lever part having a force application point for receiving the force transmitted from the force-transducing part to the lever part, and two lever arms which run from the force application point in each case to one of the two force starting points (12, 13), and
an adjusting device (20) for adjusting the force application point in order to change the ratio of the two lever arms,
**characterized in that** the adjusting device (20) has a snap-in part (22) and the lever part (10) has, in a middle region (14), a grid surface (15) determining a plurality of snap-in positions for the snap-in part (22).

2. Device for force distribution according to Claim 1, **characterized in that** the snap-in part (22) is arranged so as to be rotatable about an axis of rotation for adjustment from a snap-in position to an adjacent snap-in position.

3. Device for force distribution according to Claim 2, **characterized in that** the axis of rotation is perpendicular to the incoming force (51) and the incoming force (51) presses the snap-in part (22) against the grid surface (15).

4. Device for force distribution according to Claim 2, **characterized in that** the axis of rotation is parallel to the incoming force.

5. Device for force distribution according to any of the preceding Claims, **characterized in that** the incoming force (51) is a tensile force.

6. Device for force distribution according to any of Claims 1 to 4, **characterized in that** the incoming force is a shear force.

7. Device for force distribution according to any of the preceding Claims, **characterized in that** a starting force is aligned with the incoming force in one snap-in position (extreme position) of the snap-in part, and that the other starting force is aligned with the incoming force in another snap-in position (opposite extreme position) of the snap-in part.

8. Device for force distribution according to Claim 8, **characterized by** limiting devices which limit the maximum adjustable snap-in positions for the snap-in part (22), the limiting devices preferably having pins and/or caps which can be arranged on the two sides of the grid surface (15).

9. Device for force distribution according to any of the preceding Claims, **characterized in that** the grid surface (15) has a surface structure in the form of a toothed rack, and that the snap-in part (22) has a corresponding surface structure in the form of a cog wheel.

10. Device for force distribution according to any of the preceding Claims, **characterized in that** the snap-in part (22) has projections with a round surface structure, preferably a surface structure in the form of segments of a circle, and that the grid surface (15) has a corresponding structure for receiving the projections of the snap-in part (22).

11. Device for force distribution according to Claim 10, **characterized in that** the snap-in part (22) has six to three, preferably five to four and particularly preferably four projections.

12. Device for force distribution according to any of the preceding Claims, **characterized in that** the grid surface (15) provides five to twenty one, preferably nine to thirteen and particularly preferably eleven snap-in positions.

13. Device for force distribution according to any of the preceding Claims, **characterized in that** the lever part (10) has an arc region (16) between the middle region (14) and one force starting point (12).

14. Device for force distribution according to Claim 13, **characterized in that** the lever part (10) has a further arc region (17) between the middle region (14) and the other force starting point (13).

15. Device for force distribution according to any of the preceding Claims, **characterized in that** the arc region or regions (16, 17) extends or extend in each case over more than 90 degrees, preferably over more than 135 degrees and particularly preferably over 180 degrees.

16. Device for force distribution according to any of the preceding Claims, **characterized in that** the adjusting device (20) has a control element (24) which is nonrotatably connected to the snap-in part (22).

17. Device for force distribution according to Claim 16, **characterized in that** the control element (24) is connected directly, connected via a rigid shaft (21) and/or connected via a remote control system, in particular a flexible shaft, to the snap-in part (22).

18. Device for force distribution according to any of the preceding Claims, **characterized in that** the control element (24) has a handle or an adjusting member of a remote control unit.

19. Device for force distribution according to any of the preceding Claims, **characterized by** a spring device (41) which clamps the grid surface (15) against the snap-in part (22).

20. Device for force distribution according to any of the preceding Claims, **characterized in that** the spring device (41) has a helical spring.

21. Device for force distribution according to Claim 20, **characterized in that** the helical spring (41) clamps the force-transducing part (30) away from the lever part (10) in such a way that the grid surface (15) of the lever part (10) is pressed against the snap-in part (22).

22. Device for force distribution according to Claim 20 or 21, **characterized in that** an antiwear device, preferably in the form of a ball (42), is provided between the helical spring (41) and the lever part (10).

23. Two-circuit brake unit comprising a device for force distribution according to any of the preceding Claims, **characterized in that** the force arriving when the brake pedal pressed is received by the force-transducing part (30) of the device for force distribution and is distributed by the lever part (10) over two outgoing forces which are transmitted from the two force starting points (12, 13) for actuating the main brake cylinder of the two brake circuits.

## Revendications

1. Dispositif de répartition des forces pour une installation de freinage à deux circuits, comportant
un élément d'encaissement de force (30) pour encaisser une force (51) entrante lors de l'actionnement d'une pédale de frein,
un élément formant levier (10) pour répartir la force entrante (51) à deux points de sortie de force (12, 13), l'élément formant levier présentant un point d'attaque de force pour encaisser la force transmise par l'élément d'encaissement de force à l'élément formant levier, et deux bras de levier qui s'étendent depuis le point d'attaque de force respectivement à l'un des deux points de sortie de force (12, 13), et
un dispositif de déplacement (20) pour déplacer le point d'attaque de force, afin de modifier le rapport des deux bras de levier,
**caractérisé en ce que** le dispositif de déplacement (20) comprend un élément d'enclenchement (22) et l'élément formant levier (10) comprend dans une zone centrale (14) une surface tramée (15) déterminant plusieurs positions d'enclenchement pour l'élément d'enclenchement (22).

2. Dispositif de répartition des forces selon la revendication 1, **caractérisé en ce que** l'élément d'enclenchement (22) est agencé mobile en rotation autour d'un axe de rotation pour le déplacement depuis une position d'enclenchement jusque dans une position d'enclenchement voisine.

3. Dispositif de répartition des forces selon la revendication 1, **caractérisé en ce que** l'axe de rotation est perpendiculaire à la force entrante (51), et la force entrante (51) pousse l'élément d'enclenchement (22) contre la surface tramée (15).

4. Dispositif de répartition des forces selon la revendication 2, **caractérisé en ce que** l'axe de rotation est parallèle à la force entrante.

5. Dispositif de répartition des forces selon l'une des revendications précédentes, **caractérisé en ce que** la force entrante (51) est une force de traction.

6. Dispositif de répartition des forces selon l'une des revendications 1 à 4, **caractérisé en ce que** la force entrante est une force de poussée.

7. Dispositif de répartition des forces selon l'une des revendications précédentes, **caractérisé en ce que** dans une position d'enclenchement (position extrême) de l'élément d'enclenchement, une force de sortie est en alignement avec la force entrante, et **en ce que** dans une autre position d'enclenchement (position extrême opposée) de l'élément d'enclenchement, l'autre force de sortie est en alignement avec la force entrante.

8. Dispositif de répartition des forces selon la revendication 1, **caractérisé par** des dispositifs de limitation qui limitent les positions d'enclenchement réglables au maximum pour l'élément d'enclenchement (22), les dispositifs de limitation comprenant de préférence des tiges et/ou des capuchons qui sont susceptibles d'être agencés sur les deux côtés de la surface tramée (15).

9. Dispositif de répartition des forces selon l'une des revendications précédentes, **caractérisé en ce que** la surface tramée (15) présente une structure de surface à la manière d'une crémaillère, et **en ce que** l'élément d'enclenchement (22) présente une structure de surface correspondante à la manière d'une roue dentée.

10. Dispositif de répartition des forces selon l'une des revendications précédentes, **caractérisé en ce que** l'élément d'enclenchement (22) comprend des saillies avec une structure de surface ronde de préférence en forme de segment circulaire, et **en ce que** la surface tramée (15) présente une structure correspondante pour recevoir les saillies de l'élément d'enclenchement (22).

11. Dispositif de répartition des forces selon la revendication 10, **caractérisé en ce que** l'élément d'enclenchement (22) comprend six à trois, de préférence cinq à quatre et en particulier quatre saillies.

12. Dispositif de répartition des forces selon l'une des revendications précédentes, **caractérisé en ce que** la surface tramée (15) comprend cinq à vingt et un, de préférence neuf à treize et en particulier de préférence onze positions d'enclenchement.

13. Dispositif de répartition des forces selon l'une des revendications précédentes, **caractérisé en ce que** l'élément formant levier (10) comprend une zone arquée (16) entre la zone centrale (14) et l'un des points de sortie de force (12).

14. Dispositif de répartition des forces selon la revendication 13, **caractérisé en ce que** l'élément formant levier (10) comprend une autre zone arquée (17) entre la zone centrale (14) et l'autre point de sortie de force (13).

15. Dispositif de répartition des forces selon l'une des revendications précédentes, **caractérisé en ce que** la ou les zones arquées (16, 17) s'étendent chacune sur plus de 90°, de préférence sur plus de 135° et en particulier de préférence sur 180°.

16. Dispositif de répartition des forces selon l'une des revendications précédentes, **caractérisé en ce que** le dispositif de déplacement (20) comprend un organe de manipulation (24) qui est relié solidairement en rotation à l'élément d'enclenchement (22).

17. Dispositif de répartition des forces selon la revendication 16, **caractérisé en ce que** l'organe de manipulation (24) est relié à l'élément d'enclenchement (22) soit directement, soit via un arbre rigide (21) et/ou via un système de télé-manipulation, en particulier un arbre flexible.

18. Dispositif de répartition des forces selon l'une des revendications précédentes, **caractérisé en ce que** l'organe de manipulation (24) comprend une poignée à main ou un élément de positionnement d'une installation de télécommande.

19. Dispositif de répartition des forces selon l'une des revendications précédentes, **caractérisé par** un dispositif élastique (41) qui serre la surface tramée (15) contre l'élément d'enclenchement (22).

20. Dispositif de répartition des forces selon l'une des revendications précédentes, **caractérisé en ce que** le dispositif élastique (41) comprend un ressort hélicoïdal.

21. Dispositif de répartition des forces selon la revendication 20, **caractérisé en ce que** le ressort hélicoïdal (41) serre l'élément d'encaissement de force (30) en éloignement de l'élément formant levier (10), de telle sorte que l'élément formant levier (10) est pressé par la surface tramée (15) contre l'élément d'enclenchement (22).

22. Dispositif de répartition des forces selon l'une ou l'autre des revendications 20 et 21, **caractérisé en ce qu'**il est prévu une protection anti-usure, de préférence sous la forme d'une bille (42) entre le ressort hélicoïdal (41) et l'élément formant levier (10).

23. Installation de freinage à deux circuits comportant un dispositif de répartition des forces selon l'une des revendications précédentes, **caractérisé en ce que** la force entrante lors de l'actionnement de la pédale de frein est encaissée par l'élément d'encaissement de force (30) du dispositif de répartition de freinage et est répartie par l'élément formant levier (10) en deux forces sortantes qui sont transmises par les deux points de sortie de force (12, 13) pour actionner les maîtres-cylindres des deux circuits de frein.
